# EUROPEAN PATENT APPLICATION

(11) **EP 4 379 744 A1**
(43) Date of publication of application: **05.06.2024**
(21) Application number: 22210846.6
(22) Date of filing: 01.12.2022
(51) Int. Cl.: G21D 1/00

(54) **MANAGEMENT OF STRUCTURES FOR PACKAGING**

(71) Applicant: AFRY Deutschland GmbH, 68161 Mannheim (DE)
(72) Inventor: Bauer, Andreas, 67434 Neustadt an der Weinstraße (DE)
(74) Representative: Valvoda, Jakob

(57) **Abstract**

The present disclosure refers to a method for managing structures to be packaged in containers, comprising providing a model specifying a geometry of a structure, at least parts of the structure to be packaged in one or more containers, the model further specifying at least one attribute for the geometry of the structure, segmenting the geometry of the structure into a plurality of segments, determining one or more groups of segments of the plurality of segments, each group of segments to be arranged in one of the one or more containers, for each container, calculating at least one property of the container based on the at least one attribute associated with the group of segments arranged in the container, and verifying the at least one property of at least one container based on at least one threshold. Furthermore, a device, a deconstruction plan for a structure, a deconstructed structure and respective containers are described.

## Description

### TECHNICAL FIELD

The disclosure relates to management of structures. In particular, the disclosure relates to a method for managing structures to be packaged in containers, a device, and a respective computer-readable medium. The disclosure further relates to a deconstruction plan, a deconstructed structure, and one or more containers. According to preferred embodiments, the disclosure may relate to management, deconstruction, and/or packaging of structures, such as contaminated or activated structures.

### BACKGROUND

In various application areas, structures are to be packaged in containers. This may include packaging of various goods or products in containers or boxes that have a respective form capable of receiving the good or product. If a structure does not fit a single container or box, it may be split in parts and packaged in multiple containers or boxes. Since the individual parts of the structure may have different characteristics, the multiple containers and their contents may have different properties. For example, individual parts of the structure may have a smaller or larger form, a different weight or other properties of the structure or of the material forming the structure.

This particularly applies to structures containing materials that may have an impact on the environment or can affect properties and characteristics of the container, such as contaminated or activated materials. Contaminated materials may at least partially include a constituent, impurity, or some other element that spoils, corrupts, infects, makes unfit, or makes inferior the material, a physical body or structure, environment, workplace, and other, to name a few. Examples may include chemical contamination, environmental contamination, food, beverage, or pharmaceutical contamination, or radioactive contamination, in any combination. Activated materials may be (at least)partially radioactive. Packaging of (contaminated or activated) structures requires complex considerations and is typically performed manually by specially trained personnel or experts.

For example, regarding radioactive materials, operation of nuclear facilities or nuclear power plants continuously generates radioactive waste. Moreover, nuclear facilities or nuclear power plants may be closed and enter a decommissioning stage, which may generate radioactive waste that may include potentially contaminated or activated components or building parts of the nuclear facility or nuclear power plant. Unlike harmful or general waste, radioactive waste cannot be eliminated by chemical, physical, or biological means, but only by self-decay or nuclear transmutation to reduce their radioactivity level. Solid waste such as filter elements, waste resins, concentrated solutions, slurries, dismantled metal parts, concrete structures, contaminated soil, technical waste, and other miscellaneous waste generated in nuclear facilities or nuclear power plants is generally first sorted and prepared and then packaged in containers. The containers comprising radioactive waste are then temporarily stored in a storage for a number of years and then transported to a disposal site for final disposal. Management of packaging and/or disposal of nuclear waste is typically governed by nuclear safety laws and regulations and requires complex processing.

Similar considerations apply to management of packaging of structures that may result in a chemical, environmental, food, beverage, or pharmaceutical contamination of the environment or the respective containers.

### SUMMARY

The disclosure addresses drawbacks of existing approaches with regard to management of packaging of structures into containers. In particular, it may be difficult to automatically define a decomposition of a structure to be packaged into available containers. This particularly applies to structures with characteristics that may affect properties of the container.

Thus, there is a need in the art for further optimizing management approaches for structures that are to be packaged in containers.

The problem is solved by a method for managing of structures to be packaged in containers, a device, and a computer-readable medium. Preferred embodiments are defined in the dependent claims.

A first aspect of the disclosure defines a method for managing structures to be packaged in containers. The method comprises providing a model specifying a geometry of a structure, at least parts of the structure to be packaged in one or more containers, the model further specifying at least one attribute for the geometry of the structure; segmenting the geometry of the structure into a plurality of segments; determining one or more groups of segments of the plurality of segments, each group of segments to be arranged in one of the one or more containers; for each container, calculating at least one property of the container based on the at least one attribute associated with the group of segments arranged in the container; and verifying the at least one property of at least one container based on at least one threshold.

The method may be a computer-implemented method. In particular, the method may be executed by one or more processing units on one or more computing devices that may form a system. Thus, the method may be executed in the system, including a plurality of the one or more computing devices, which may be, for example, connected via at least one network.

The method is directed at management of structures that are to be packaged into containers. Individual parts of the structure may be attributed and depending on segmentation of the structure and assignment of the segments to containers, the respective attributes may affect properties of the respective container that are verified with respect to threshold(s). As such, a final packaging complies with the threshold(s).

The form of the structure may be represented as a geometry in the model. Furthermore, the geometry may be associated with respective attributes. For example, the geometry may be represented using primitives and the model may specify the at least one attribute for one or more of the primitives, each primitive, or groups of primitives. Each group of primitives in the model may, for example, represent a component of the structure. Similarly, components of the structure may be represented in the model as parts of the geometry. A respective association between parts of the geometry in the model and components of the structure may be reflected in an attribute of the at least one attribute. Preferably, the attribute of a primitive or any other part of the geometry in the model may be used to identify a corresponding component of the structure. Accordingly, the model could be understood as a digital or virtual representation of the structure.

As such, the structure may represent any kind of physical structure, preferably a solid or semi-solid structure, that is to be packaged into the one or more containers.

The one or more containers may be containers suitable for receiving one or more parts of the structure. For example, the one or more containers may be containers for packaging contaminated or activated structures or materials. The one or more containers may have the same form. As an alternative, at least one of the one or more containers may have a different form. Each of the one or more containers may have a form, structure, and/or physical properties, such as physical properties of a cover of the container. For example, at least one container may be a concrete container or a cast-iron container. Other containers may be used.

The model may be automatically generated or pre-generated, provided on a medium, in a storage, memory, or buffer, made available for download from a distributed or local storage, or otherwise provided in computing device(s) performing the method. As such, the model may represent a digital representation of the physical structure.

The geometry of the model may be segmented into the plurality of segments. The segments may be established according to any suitable segmentation, fragmentation, decomposition, or cutting technique, using equidistant, regular, or irregular grids. Additionally or as an alternative the segments may be built according to the groups of primitives, or any other association of parts of the geometry with components of the structure. For example, the segmentation may take into consideration the individual components of the structure to generate initial segments that may form the plurality of segments and/or apply further segmentation techniques to further decompose the initial segments into the plurality of segments.

The segmentation may be automatically performed on the computer(s) performing the method. The segmentation may be controlled using one or more parameters that may take into account physical properties of the structure and of the one or more containers, such as size of the structure and size of the one or more containers. For example, a default size of the segments may be set such that a segment of the default size can be packaged into at least one of the one or more containers.

The groups of segments may be determined using any suitable grouping, distribution, packaging, or optimization approach or technique. The groups may be built based on the plurality of segments such that the respective groups of segments are assigned to individual containers. Each group can be assigned to a different container. Accordingly, each container may be assigned to a different group. The determination of groups may be automatically performed on the computer(s) performing the method. The determination of groups may be controlled using one or more parameters that may take into account physical properties of the plurality of segments and/or of the one or more containers, such as size of the plurality of segments, size of each one of the one or more containers, available space in the one or more containers (filling level), properties of a cover of each one of the one or more containers, distance of segments to each other, for example, neighboring segments, attributes of segments, association of segments with components in the structure, and the like, in any combination. For example, one or more segments (that have not been added previously to another group) may be added to a group as long as the to be added one or more segments can be accommodated by the associated container. For example, one or more segments (that have not been added previously to another group) may be added to a group to achieve an optimal filling level of the associated container. Preferably, the associated container may be filled in such a way that the available space within the associated container is filled as much as possible and completely. In another example, neighboring segments may be preferred to form a group. For example, one or more segments (that have not been added previously to another group) may be added to a group as long as (accumulated) attributes of the to be added one or more segments meet one or more thresholds. Other parameters and physical properties may be used in any combination when determining the groups of segments. The groups of segments may be further determined as a best solution or an optimum solution for given constraints. For example, the groups of segments may be defined such that the used (or filled) volume of the container is optimized, and/or such that a material density of the segments within the container, which may result in a weight of the container or weight distribution within the container, is optimized, and/or such that a level of activation or a degree of contamination, such as radioactive contamination, is optimized, with regard to target thresholds. As such, the groups may be determined using an optimization algorithm.

When the groups are built, each container can be analyzed and evaluated with regard to the at least one property of the container that may be at least partially determined by the attribute(s) associated with the group of segments arranged in the respective container. The at least one property may represent any physical property of the container, such as an overall weight of the container, a filling level, or degree of filling of the container, which may be reflected by a remaining (unfilled) space or volume in the packed container, or a contamination or radiation value of the container, such as radiation in the container or dose rate of the container. The at least one property may be affected by a placement of the segments of the group of segments within the container.

The calculation of the at least one property may be automatically performed on the computer(s) performing the method. The calculation may be performed by dedicated processing unit, such as a simulation unit that may take into account physical properties of the group of segments and of the container, such as physical properties represented by the attributes associated with segments of the group of segments, placement of the segments in the container, or shielding values of a cover of the container, to name a few, which may be used in any combination.

The at least one calculated property may be verified with regard to at least one threshold. For example, the at least one threshold may be defined based on conditions for the container, such as a maximum or minimum weight, filling level of the container, load distribution across the container, maximum or minimum contamination or radiation value(s), such as radioactive contamination or any other type of contamination, and the like, which may be used in any combination. The condition(s) underlying the at least one threshold may be defined by laws, regulations, specifications, and the like, which may be, for example, defined for a temporal or final storage environment for the one or more containers.

The method enables an advantageous and optimized determination of packaging of segmented, and attributed structures into containers that meet pre-defined condition(s). The method may be fully automated and provides for optimized decompositions of structures for packaging according to the condition(s).

In a preferred embodiment, the segmenting includes defining a grid of base elements for the model. The grid may be at least partially a regular or irregular structure that may have the same dimensionality as the geometry of the model. For example, a two-dimensional (2D) grid can be used for a 2D geometry in the model. Likewise, a three-dimensional (3D) grid can be used for a 3D geometry in the model. It is to be understood that any dimensionality can be used to define, for example, temporal characteristics or any other physical property that may be represented as a dimension in the model. The grid may be equidistant for at least some or for all of the dimensions, i.e., for one or more dimensions or for all dimensions of the model, the grid may have an equal spacing or distances. Moreover, the spacing or the distances may be equal for all dimensions.

The grid may take into account boundaries of parts or components of the underlying structure. Thus, the grid may be at least partially regular or irregular within or outside the boundaries of one or more pairs or components of the underlying structure.

The grid may include one or more arrays of the base elements. For example, a regular 2D grid may represent an array of squares or rectangles (base elements). Similarly, a regular 3D grid may represent arrays of forms, including cubes or rectangular cuboids, or any other hexahedra or cuboids (base elements). In general, the grid may represent one or more arrays of polyhedral that may represent the base elements. Additionally or as an alternative, at least some of the dimensions of the grid may be irregular. The spacing of the grid structure in the irregular dimensions may be based on the at least one attribute or association of parts of the geometry with components of the structure. The plurality of segments may be determined based on the grid. For example, each segment may correspond to a base element of the grid.

Preferably, the segmenting further includes combining at least some neighboring base elements to form the plurality of segments. For example, the grid may be a regular, equidistant grid. One or more neighboring base elements may be combined to form segments of different shape, such as polyominoes or polycubes, which may include elongated and/or bent segments, such as column-like or brick-like structures. Said combining may take into account whether the structure can be deconstructed based on the segments. For example, the structure may be concrete structure and the deconstruction process may have constraints with regard to cutting of concrete blocks from the concrete structure. This may take into account that segments representing parts and components on the top of the structure have to be removed first, before underlying parts or components of the structure can be processed. Thus, the combining of neighboring base elements may prefer brick-like structures and avoid nested or interlaced segments.

As such, the method starts with base elements of the grid, which allows for a grid-based analysis of the structure, wherein the segments may represent neighboring base elements of the grid. The segments including the combined base elements may take into account physical properties of the underlying structure and/or constraints of deconstruction processing to enable, for example, a simplified deconstruction of the structure based on the determined optimized groups of segments.

The base elements may represent smallest building structures that can be created when deconstructing the structure. The smallest building structures may have any suitable size, such as 50 centimeters, 1 meter, 1.50 meters, 2 meters, and the like, in at least one (or all) dimension(s). For example, a base element may have a size of 50 cm x 50 cm x 50 cm. Even though other sizes and sizes diffing across the dimensions can be used, such as 50 cm x 50 cm x 1m.

In a further embodiment, the method further comprises, if the at least one property of at least one container does not satisfy the at least one threshold, determining one or more new groups of segments of the plurality of segments, each new group of segments to be arranged in one of the one or more containers, and calculating, for each container, the at least one property based on the at least one attribute associated with the new group of segments arranged in the container. As a starting parameter, the determination of the new groups may consider the deficient container(s) and a metric that may specify a distance of the calculated property with regard to the threshold(s) for the other containers. This can be used to identify potential segments that may be removed from one group and moved to another group.

The new groups of segments may be determined using any suitable grouping, distribution, packaging, or optimization approach or technique. The approach or technique may correspond to the approach or technique used for the initial determination of the groups. Thus, same considerations as discussed above with regard to the determination of groups may be applied to the determination of the new groups, in any combination. Preferably, the determination of the new groups may include a calculation of the metric for at least some or for all of the containers and using the metric as a starting parameter of an optimization technique. This may determine a new (local) optimum grouping of the segments.

The determination of new groups may be automatically performed on the computer(s) performing the method. The determination of new groups may be controlled using the starting parameters as well as one or more parameters that may take into account physical properties of the plurality of segments and of the one or more containers, such as size of the plurality of segments, size of the one or more containers, distance of segments to each other, for example, neighboring segments, attributes of segments, association of segments with components in the structure, and the like, in any combination. Thus, the new groups of segments may be determined as a best solution or an optimum solution for given constraints.

The properties of the containers of the new groups may be verified to determine whether the properties of all containers satisfy the at least one threshold. If this is not the case, further new groups of segments may be determined in an iterative manner until a grouping of segments is determined that satisfies the conditions (reflected by the at least one threshold). The iterative processing may be terminated after a pre-determined time duration or after a number of rounds if no optimum solution can be found that satisfies the conditions. In this case the model, number of the containers, form and/or configuration of the containers and/or other parameters may be changed or adjusted, and the method may be re-started.

In a particularly preferred embodiment, each group of segments is arranged in a respective container according to an arrangement scheme. The arrangement scheme may indicate a position and orientation of each segment of the group of segments in the container. The position and orientation of each segment in the container may be chosen such that components or parts of the structure corresponding to the segments of the group may be packaged into the container. The arrangement scheme may further reflect requirements directed at spacing between the components or parts of the structure within the container. The arrangement scheme may be automatically determined on the computer(s) performing the method. The arrangement scheme may be determined by one or more processing units, such as a general-purpose processor or a simulation unit, that may take into placement requirements, such as distancing, and the attributes associated with the segments of the group, which may reflect, for example, physical properties of the segments in the group. The arrangement scheme may be determined based on one or more rules that may be used by an optimization approach or technique.

The arrangements scheme may define the positioning of the segments in a particular container. This may also affect the at least one property of the particular container. Thus, according to another embodiment, the method further comprises, if the at least one property of at least one container does not satisfy the at least one threshold, determining a new arrangement scheme for at least one of the containers, and calculating, for each of the at least one container, the at least one property based on the at least one attribute associated with the group of segments arranged in the container according to the new arrangement scheme. Preferably, the new arrangement scheme may determine for each container that does not comply with the conditions, e.g., based on whether the at least one property meets the at least one threshold. A different arrangement of the segments may affect the at least one property for the container. For example, if the segments of the group within the container have different weights, re-arranging the segments according to the new arrangement scheme may change a distribution of load across the container, for example. Likewise, for a contaminated or activated structure, placing segments that correspond to parts or components with a higher degree of contamination or radiation to a central location and/or shielding these segments with segments corresponding to less contaminated or activated parts or components may lower the impact on the surface or the cover of the container, which may result in a lower degree of contamination or dose rate of the container. Thus, placement of segments may result in an intrinsic shielding or a self-shielding of the container.

In yet another embodiment, the one or more groups of segments include all segments of the geometry. As a result, all segments of the geometry are distributed across the at least one container. Additionally or as an alternative, the method may calculate a required space for the structure and compare the required space with the available storage space in the one or more containers. If there is not enough storage space, the one or more groups of segments may not include all segments of the geometry. Rather, the one or more groups of segments may include a part of the structure that can be accommodated in the available storage space. The method may further indicate that additional storage space is required if no optimal solution can be found that accommodates all segments of the geometry. The method may further analyze the one or more containers to determine a subset of the one or more containers or one container that are/is suitable for accommodating the structure. This may be done, for example, if there is enough storage space. The method may determine an optimal subset of containers or an optimal container to accommodate the structure. The optimal subset of containers or an optimal container may be determined based on the one or more containers and/or further available containers of a different type and/or with different properties. The optimal subset or the optimal container may be determined based on a filling level of the container. It may be desirable for a container to be filled as completely as possible and/or for a filled container to have a minimum of unused volume or space. It may also be desirable that a number of containers in the optimal subset is low. The optimal subset or the optimal container may be proposed to an operator.

According to another embodiment, the at least one property is calculated using a physical simulation configured to simulate the at least one property of at least one container based on the at least one attribute of each segment of the group of segments arranged in the container. The physical simulation may be adapted to the properties of the structure, such as a type of contamination for contaminated structures or activation of the structure. For example, for radioactive structures, a tool for calculations of particle transport and interactions with matter may be used to simulate radiation within the container, which can be used to determine a dose rate of the container. The physical simulation may be performed on at least one central processing unit of the computer(s) executing the method or on a dedicated processing or simulation unit. The physical simulation may use one or more simulation engines, such as a physics engine, a radiation engine, an interaction engine, a graphics engine, other simulation engines, and the like, in any combination. The physical simulation may read or retrieve the attributes related to the segments of the group, build a virtual model of the container including the group of segments, and simulate physical behavior of the container, which may result in the at least one property of the container.

Preferably, the method may use one or more simulation engines or simulation environments that may be used for segmenting the geometry of the model or simulating the properties of the containers. The one or more simulation engines or simulation environments may include, for example, a game engine, a graphics engine, a physics engine, or a rendering engine configured to simulate a virtual environment and generate a rendered output responsive to interactions. The game engine, graphics engine, physics engine, and/or rendering engine, in any combination, may be configured to perform the simulation tasks, such as segmenting the geometry of the model (for example, using the graphics or rendering engine) or simulating the properties of the containers (for example, using the physics engine). A rendering engine, as used throughout this description, may be a software and/or hardware framework capable of receiving an abstract representation of a scene, such as a scene graph, including virtual objects with one or more of graphic elements, acoustic elements, and elements of any other modality, as well as definitions of conditions in the scene, such as light conditions. The rendering engine may be capable of processing the information and delivering a realistic representation of the scene. The rendering engine may be implemented on a simulation unit and utilize dedicated rendering hardware capable of computing a realistic appearance of virtual objects in the virtual environment taking into account surface characteristics, reflections, multiple light sources, ambient light, and other conditions. Preferably, the simulation engine may be implemented by the at least one central processing unit of the computer(s) that simulate the virtual environment. Preferably, the game engine, graphics engine, physics engine, and/or rendering engine may be implemented on simulation units, independent of any application executed on the computer(s). Thus, the game engine, graphics engine, physics engine, and/or rendering engine may be provided as hardware, software, or a combination thereof.

In a preferred embodiment, the method further comprises measuring one or more values related to the structure. Preferably, the method may further include verifying the at least one property based on the one or more values. The structure may comprise one or more components or parts, and the one or more values may be related to the one or more components or parts. The values may be used to verify the simulated property of the container. This may be used as a verification step to evaluate correctness of the simulation. Preferably, the one or more values may be used to adjust the attributes of the model. For example, in case the structure includes radioactive material, the values may specify a component-related activity of components of the structure. Initially, the attributes may indicate an initial calculation, estimation, or determination of the component-related activity of the radioactive components of the structure. The attributes may also be derived from a database or other data source specifying component-related activity of the components of the structure. The initial attributes may be updated based on the measured one or more values. The one or more values may be measured selectively or randomly as individual samples. If the structure has activated or contaminated parts, such as radioactive material, it may be difficult to perform all measurements at an initial stage since measurements must meet high safety requirements. Accordingly, the attributes may be calculated based on available data, such as activation data, which may be derived from MCMP calculations, and subsequently, measurements may be performed selectively or by sampling, to update the attributes of the model. In one embodiment, the method may be re-iterated based on the updated attributes, for example, if the measured one or more values deviate from the previous attributes.

In another embodiment, the method further comprises determining a deconstruction plan for the structure based on the one or more groups of segments in the model, the deconstruction plan specifying a deconstruction of the structure into a plurality of components corresponding to the plurality of segments in the one or more groups. The deconstruction plan may represent a mapping of the segments of the geometry on corresponding components or parts of the structure. Each part or component may correspond to a segment. The deconstruction plan may further indicate an order of deconstruction of the structure and an association of the components or parts with a respective container. The deconstruction plan may be determined based on physical properties of the structure, and/or boundaries of structural components in the structure. The deconstruction plan may further indicate tools required for separating the component from the structure. The deconstruction plan may represent a storage medium including machine-readable instructions that are capable of configuring a deconstruction site or environment to deconstruct the structure.

In a preferred embodiment, the method further comprises deconstructing the structure into the plurality of components according to the deconstruction plan. Deconstruction of solid structures may involve dismantling of structural components, and/or cutting, slicing, or chopping the structure to isolate components corresponding to the segments. The order of deconstruction and the tools may be specified by the deconstruction plan. The deconstruction plan (representing a machine-readable medium including executable instructions) can also be input into an automated deconstruction site or environment that may execute the deconstruction by reading the instructions specified in the deconstruction plan and configuring tools identified in the deconstruction plan according to the instructions and applying the tools on the structure, to separate the plurality of components.

According to a particularly preferred embodiment, the method further comprises packaging the plurality of components into the one or more containers based on the one or more groups and the associated containers. The packaging may be triggered by the deconstruction plan, which may include a mapping of the groups of segments onto the plurality of components. The components may be grouped according to their association with the respective group of segments and/or the respective container and may be further placed in the container according to the arrangement scheme that indicates placement or arrangement of the segments of the group in the container.

According to another embodiment, the structure includes contaminated or activated material and the at least one attribute identifies a contamination or radiation value for each segment of the structure. The contaminated or activated material may have an impact on the environment or can affect properties and characteristics of the container. The contamination may include chemical contamination, environmental contamination, food, beverage, pharmaceutical contamination, or radioactive contamination, in any combination. The at least one attribute may define a degree of contamination of parts or components of the contaminated structure in the model. For example, the structure may contain material contaminated with asbestos, polychlorinated biphenyls (PCBs), pentachlorophenol (PCP) and/or lindane, and/or radioactive material, to name a few. Activated material may be initially stable material that was made radioactive using radiation. This may be referred to as induced radioactivity. One form of induced radioactivity may be, for example, neutron activation, which occurs when an atomic nucleus captures one or more free neutrons. The resulting isotope may be unstable (radioactive). Other forms of induced radioactivity may result from removing a neutron by photodisintegration. A high neutron flux, for example, inside nuclear reactors, can induce radioactivity, thereby resulting in components or parts in those reactors that may become radioactive from the radiation to which they are exposed. Accordingly, the structure, which may comprise the components or parts, may include activated material.

Preferably, the structure includes radioactive material. The structure may include radioactive waste or contaminated or activated (radioactive) components of a nuclear platform or nuclear facility. The structure may further include contaminated or activated (radioactive) building parts or components, such as filter elements, waste resins, concentrated solutions, slurries, dismantled metal parts, concrete structures, contaminated soil, technical waste, and other miscellaneous waste generated in nuclear facilities or nuclear power plants.

According to another embodiment, the method further comprises specifying component-related activity of radioactive components of the structure. The specified values of the activity may be included in the at least one attribute as component-related activity.

In a preferred embodiment, the method further comprises using activation data to determine the component-related activity. The activation data can be neutron activation data. The activation data can be used to determine component-related radiological activity. The activation data can be calculated using a simulation software for particle transport, which may take into account reactor charge cycles and other parameters of a reactor. One example of a simulation software includes MCMP. The activation data may be provided to determine initial attributes. The activation data can be provided as a table, as a generalized diagram or as a spreadsheet file. However, it is to be understood that any other data source or data format can be used. Direct sampling results or measurements can be provided or delivered during processing, for example, before, during or after dismantling of the structure. This may be done by measuring one or more values related to the structure, as disclosed with regard to one or more embodiments. The samples or measurements can be used for verification of the packaging.

In a further embodiment, the geometry is provided as a three-dimensional model. The 3D model may represent a surface of the geometry or surfaces of components of the geometry using geometric primitives. This may include vertices, edges connecting two respective vertices, and triangles with three edges forming a surface part of the geometry. Each triangle or a group of triangles, or a part of the 3D geometry defined by the triangles may be associated with value(s) of the at least one attribute. The part of the 3D geometry may include a volume or a surface. The 3D model may be segmented by cutting the triangles, which may introduce additional vertices at the cutting edge. Additionally or as an alternative, the 3D model may be segmented or split along existing edges or at boundaries of the parts of the 3D geometry. The geometry may be processed using a graphics engine, a rendering engine, or any other processing or simulation unit capable of processing 3D geometry models.

In a preferred embodiment, the method further comprises building the three-dimensional model based on one or more two-dimensional plans. The one or more 2D plans and further data, such as contamination, activation or radiation values, can be combined using a generation tool for digital models of physical structures, such as building information modeling (BIM) tools and the like. BIM represents a technology that enables generation and management of digital representations of physical and functional characteristics of places. Physical 2D plans may be scanned. Either the scanned versions or digital 2D plans can be arranged to form a basis for a 3D model. A plurality of 2D plans can be used to pre-generate a 3D model. Additionally or as an alternative, (existing) 3D models may be refined using data from the 2D plans. Values reflecting physical parameters, conditions, and/or characteristics of the structure may be incorporated into the 3D model using the at least one attribute.

A second aspect of the disclosure defines a device, comprising a processor configured to perform a method according to one or more embodiments of the first aspect. In particular, the device can be configured to provide a model specifying a geometry of a structure, at least parts of the structure to be packaged in one or more containers, the model further specifying at least one attribute for the geometry of the structure; segment the geometry of the structure into a plurality of segments; determine one or more groups of segments of the plurality of segments, each group of segments to be arranged in one of the one or more containers; for each container, calculate at least one property of the container based on the at least one attribute associated with the group of segments arranged in the container; and verify the at least one property of at least one container based on at least one threshold.

Preferred embodiments of the device may include software or hardware units being configured with dedicated software, that may provide the functionality according to the processing steps of one or more embodiments of the present disclosure. For example, the device may comprise an input interface for providing the model; a segmentation unit to segment the geometry; a determination unit to determine the groups; a calculator to calculate the property; and a verifier to verify the property. Additionally or as an alternative, the device may further comprise a scanner configured to digitize one or more two-dimensional plans. Additionally or as an alternative, the device may further comprise a modeling component configured to generate a three-dimensional model and specify the at least one attribute for the geometry of the structure. Additionally or as an alternative, the device may further comprise simulator or a simulator component configured to determine the at least one property of the container based on the at least one attribute. Additionally or as an alternative, the device may further comprise an output interface configured to output a deconstruction plan for the structure.

The hardware units may be coupled via an interconnect, such as a bus or a network. The hardware units may be implemented on a plurality of devices. In this case, the device may represent a system including the plurality of devices and the interconnect, to enable exchange of data between the plurality of devices.

In one embodiment, the device may further control a deconstruction site or environment using the deconstruction plan to at least partially deconstruct the structure.

A third aspect of the disclosure defines a computer-readable medium, at least one computer-readable medium, one or more computer-readable media or a plurality of computer-readable media storing instructions thereon that, when executed by a computing device, configure the computing device to perform a method according to one or more embodiments of the first aspect of the present disclosure. In particular, the method may be for managing structures to be packaged in containers. The method may comprise providing a model specifying a geometry of a structure, at least parts of the structure to be packaged in one or more containers, the model further specifying at least one attribute for the geometry of the structure; segmenting the geometry of the structure into a plurality of segments; determining one or more groups of segments of the plurality of segments, each group of segments to be arranged in one of the one or more containers; for each container, calculating at least one property of the container based on the at least one attribute associated with the group of segments arranged in the container; and verifying the at least one property of at least one container based on at least one threshold.

The disclosure further defines a deconstruction plan for a structure. In one embodiment, the deconstruction plan specifies a deconstruction of the structure into a plurality of components, wherein the deconstruction plan is generated according to one or more embodiments of the method according to the first aspect.

The disclosure further defines a deconstructed structure. In one embodiment, the deconstructed structure includes one or more components, wherein the structure is deconstructed into the one or more components according to one or more embodiments of the method according to the first aspect.

The disclosure further defines one or more containers. In one embodiment, the one or more containers include a deconstructed structure, wherein the one or more containers are packaged according to one or more embodiments of the method according to the first aspect.

Preferably, with regard to the deconstructed structure or the one or more containers according to one or more embodiments, the structure includes radioactive material.

Preferably, with regard to the one or more containers, the one or more containers are containers for radioactive waste.

Embodiments of the present disclosure refer to management of a (physical) structure that is to be packaged into containers. The physical structure is represented as a (digital) model that includes an attributed geometry, which reflects the form of the physical structure. The geometry is segmented into (digital) segments, wherein each segment may correspond to a (physical) part or component of the structure. The segments are processed by a computing device to determine an optimized grouping of structures that indicate how the physical structure can be deconstructed and packaged into the physical containers. Preferably, the physical structure is packaged into the physical containers in a manner that optimizes the volume or space utilization in the physical container. As such, the physical container may be packed with (parts of) the physical structure in a manner, which minimizes or avoids any remaining free space or volume within the physical container. It is to be understood that the present disclosure may refer to processing of the (digital) segments with regard to the containers, such as specifying a placement of the (digital) segments into the containers. The skilled person would understand that processing of the (digital) segments with regard to the (physical) containers involves a digital model of the physical containers. For example, placing of the (digital) segments into the container, is to be understood such that the (digital) segments are placed in the (digital) model of the container. The placement of the (digital) segments in the (digital) model of the container may correspond to a placement of the (physical) parts or components of the structure (corresponding to the segments) into the (physical) container. For any physical entity involved in the digital processing according to one or more embodiments of the present disclosure, the disclosure implies and corresponds to physical processing based on the (digital) model of the physical entity, which may correspond to the physical entity.

It is to be understood that embodiments of the device according to the second aspect may include a logic, a processor or one or more functional unit(s) that may be configured according to processing steps of the method of one or more embodiments of the first aspect of the disclosure, in any combination. Likewise, the method according to embodiments of the first aspect may include processing steps reflecting a functional configuration of the structural features of the device, in any combination.

### BRIEF DESCRIPTION OF THE DRAWINGS

Specific features, aspects, and advantages of the disclosure will be better understood with regard to the following description and accompanying drawings where:
- Figure 1: illustrates a flow chart of a method according to one embodiment of the present disclosure;
- Figure 2: illustrates a schematic diagram of a deconstruction process according to one embodiment of the present disclosure;
- Figure 3: shows a flow chart of a method according to one embodiment of the present disclosure; and
- Figure 4: illustrates a conversion of a 2D map to an attributed 3D model applicable in one or more embodiments of the present disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

The techniques described herein may be implemented in various computing systems, examples of which are described in greater detail below. Such systems generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocol or in any other suitable way. Exemplary modules are described below carrying out one or more tasks, though it should be appreciated that the modules and division of tasks described may be merely illustrative of the type of modules that may implement the exemplary techniques described herein, and that the invention is not limited to being implement in any specific number, division, or type of modules. In some implementations, all functionalities may be implemented in a single module. Further, the modules are discussed below as all executing on a single computing device for clarity, though it should be appreciated that, in some implementations, the modules may be implemented on separate computing devices adapted to communicate with one another. In particular, the modules may be implemented on a device for processing simulated sensor data, on a host system or in a simulator environment according to one or more embodiments of the present disclosure, in any combination.

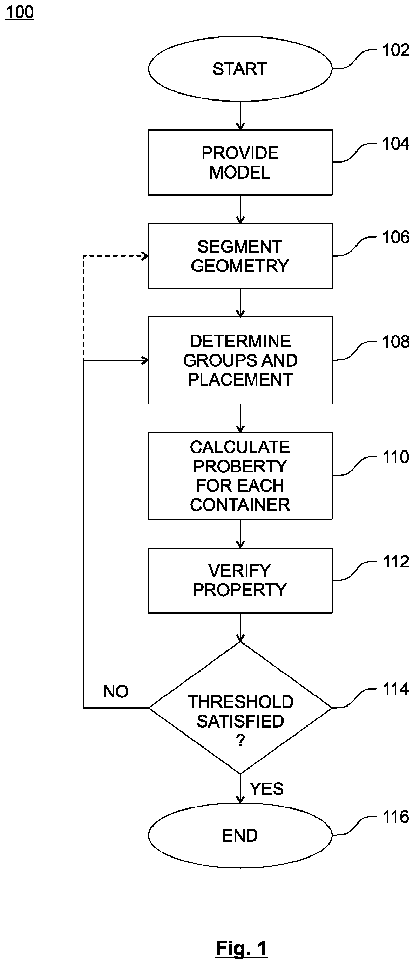

Figure 1 illustrates a flow chart of a method according to one embodiment of the present disclosure.

The method 100 may be a method for managing structures to be packaged in containers. The method 100 may be a computer-implemented method. The method 100 may include several steps, items and/or processing steps, which may each reflect one or more instructions that are executable by at least one processor to configure the at least one processor (or a corresponding at least one computing device) to at least partially perform processing as identified in the respective step, item and/or processing step of the method 100.

The method 100 may start in item 102 and may proceed with item 104, where a model specifying a geometry of a structure is provided. The model may specify at least one attribute for the geometry of the structure.

The structure may represent any kind of physical structure, preferably a solid or semi-solid structure. For example, the structure may be a machine part or a building part that is intended to be deconstructed. As part of the deconstruction processing, parts of the structure can be packaged into one or more containers.

In embodiments directed at building pars, the model may be a 3D model, such as a BIM model. According to embodiments, the attributes may be based on activation data. The activation data may be computed with respect of component or parts of the structure. The activation data may be included into the model.

In order to determine suitable deconstruction parts for optimized packaging, the method 100 may proceed in item 106 with segmenting the geometry of the structure into a plurality of segments. The segmentation may use 3D graphics approaches and/or further take into consideration physical properties of the structure, such as one or more of structural, geometrical, material, or component properties, in any combination. The segments may have a regular form, such as box- or brick-like segments. Additionally or as an alternative, at least some of the segments may have an irregular form, that may follow or at least partially correspond to the shape of the geometry of the structure.

The method 100 may proceed with item 108 to determine one or more groups of segments of the plurality of segments. Each group of segments is intended to be arranged in one of the one or more containers. Accordingly, each group could be understood as being associated with one container. In case a group is associated with two or more containers, the group may be split. Each container may be packaged with one group of segments. As an alternative, one or more containers may be packaged with two or more groups of segments. In this case, the two or more groups of segments may be merged to form a new group. In a preferred embodiment, the groups of segments are arranged in the respective containers according to an arrangement scheme, which may define a placement of each segment of the group in the respective container, by specifying one or more of an order, a position or an orientation of the segments in the respective container. For example, the arrangement scheme may define an order of the segments of the group that are subsequently placed in the container. Additionally or as an alternative, the arrangement scheme may define, for each segment of the group, the position and orientation of the segments.

The determination in item 108 may be performed by an optimization approach that may determine, for given constraints, an optimal packing arrangement for the segments of the structure in the one or more containers. The optimization may also take into account the attributes of the structure.

Item 108 may result in an optimal distribution of the segments across the one or more containers. It is to be understood that several solutions of placement of segments into the containers may exist and a provided solution, such as determination of the one or more groups of segments, may represent a local optimum for starting parameter(s) and given constraint(s).

For a given solution, the method may proceed with item 110, wherein, for each container, at least one property of the container is calculated. The at least one property is based on the at least one attribute associated with the group of segments arranged in the container. For example, the attribute(s) may define physical characteristics of the segments in the container, such as weight, mass distribution, a degree of radiation or an activation value, which may have an influence on the properties of the container. The calculation in item 110 may include a physical simulation of the at least one property based on the container packed with respective segments according to the associated group. For example, the attribute(s) may define an activation value or a degree of radiation of each of the segments in the container and the simulation may determine a dose rate of the container at the surface of the container or at a pre-defined distance, such as in 1 meter, 2 meters, or 3 meters, and the like. Item 110 may be performed for each container and the respective group of segments.

The at least one property calculated for each of the containers in item 110 may be verified in item 112 with regard to at least one threshold. Accordingly, if n containers are used, item 110 may be performed at least n times. Additionally or as an alternative, it may be determined whether, for one or more containers, the verification has been performed in a previous step for the same properties and if the properties have not changed, the verification may be omitted for the respective one or more containers. Thus, item 112 may define a verification of the at least one property for at least one container with changed properties.

The thresholds may reflect various conditions or metrics, which may, for example, be defined by a storage site for the container(s), such as a repository for contaminated or activated waste. Examples of conditions or metrics may include, in any combination, a total activity of the container, activity of relevant radionuclides, local dose rate at a surface of the container and at a distance of 1 meter and 2 meters (or another distance), surface contamination or radiation, composition of the material, quality of the fixation agent, quality of the container, quantity ratios of waste/fixative/water/aggregates, mixing of material, mass of the container, the material or internal shielding of the container, setting or material condition, water content or residual moisture, thermal behavior, criticality assessment, stacking, and handling properties of the container(s). At least one of the conditions or metrics (or another suitable condition or metric) may be used to define a threshold, which is used in item 112 to verify the property of the container. Additionally, the verification in item 112 may also consider the attribute(s) of the segments in the container, such that further to a verification of the at least one property of the container with regard to one or more thresholds, item 112 may also verify the one or more thresholds and/or the at least one attribute (in any combination) with regard to the one or more thresholds.

If in item 114 of the method 100, the threshold(s) is/are satisfied, the method 100 may provide the grouping, such as by outputting, storing, displaying, sending or transmitting the grouping of segments. For example, the grouping may be used to control one or more device to deconstruct the structure and/or to package components of the structure corresponding to respective groups of segments into the containers. The method 100 may end in item 116.

If in item 114 of the method 100, the threshold(s) is/are not satisfied, the method 100 may re-iterate item 108. In item 108, another arrangement scheme for at least the container having a property that failed the verification in item 112 may be determined. Item 110 may then proceed with calculating the at least one property for the container based on the attribute(s) associated with the group of segments arranged in the container according to the other arrangement scheme.

Re-iterating item 108 may leave containers unchanged, such as containers that have not failed the verification in item 112. Only for containers failing the verification in item 112, placement of the segments in these containers may be further optimized towards the threshold(s). Item 108 may be re-iterated a number of times. This may be controlled by a metric that reflects an improvement of the property with respect to the threshold. If new arrangement schemes determined in further iterations of item 108 do not lead to an improved solution, according to the metric, method 100 may re-iterate item 106. The metric may indicate, for example, that the property has not improved or has not substantially improved (for example, by comparing the improvement or an improvement rate with a threshold). In this case, method may proceed with item 106 to determine one or more further grouping of the segments (groups of segments). Again, each new group of segments is associated with one of the one or more containers. The at least one property of the associated container can be calculated based on the at least one attribute of the new group of segments in the container. Accordingly, item 106 can be performed for containers that have a new group of segments assigned.

The method 100 results in an optimized distribution of the segmented structure across (available) containers, wherein the placement of segments within the containers fulfills pre-defined thresholds. The method 100 provides for a fully automated management of structures that are to be packaged in containers, preferably in a volume optimized manner or in a manner which optimizes other parameters or characteristics of the containers.

The determined optimum segmentation and grouping of parts of the structure into containers may be used to deconstruct the structure and package the deconstructed parts of the structure into the containers. The determined optimum segmentation and grouping of parts of the structure into containers may be controlled and verified. In particular, properties of resulting parts and/or containers may be measured or verified. The results can be used to update component-related attributes of the model, such as component-related activity or any other property attributed to a part or segment of the structure.

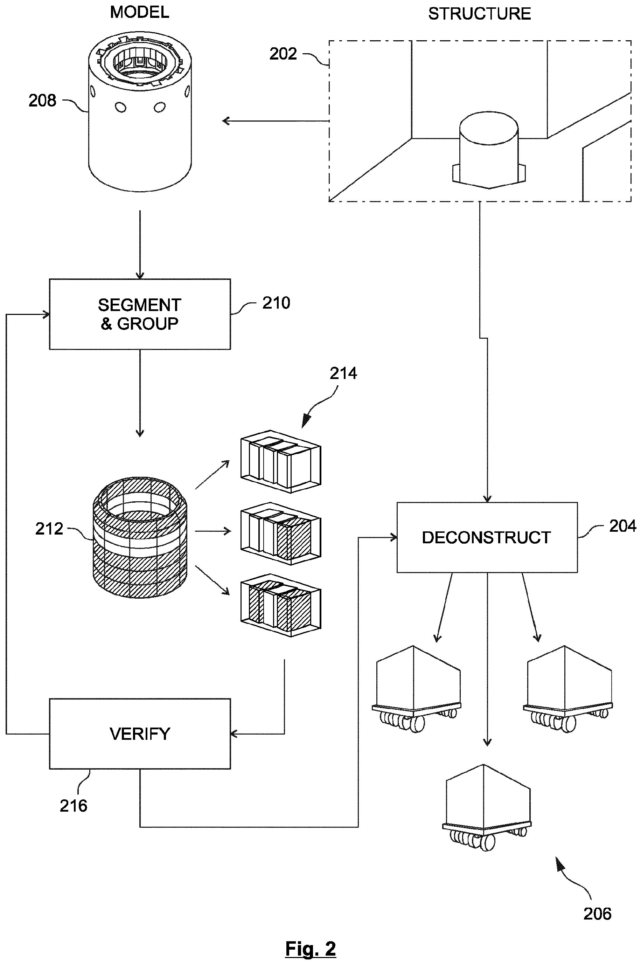

Figure 2 illustrates a schematic diagram of a deconstruction process according to one embodiment of the present disclosure. If a structure 202, such as a building or building parts or an industrial appliance or facility, is to be removed or dismantled, it must be determined, whether the structure 202 includes materials or parts, which may require a deconstruction 204. This may apply to, for example, structures comprising materials or components that are to be separated. For example, the structure 202 may include contaminated or activated (radioactive) materials and/or valuable materials or parts. At least parts of the deconstructed structure 202 may be placed in containers 206. The placement can take into consideration the properties of the deconstructed parts, such as a material composition of the parts and/or other physical properties of the parts, that may influence properties of the containers 206. Planning of deconstruction of the structure 202 and placement into respective containers 206 is typically a tedious task that requires manual interaction to adjust individual planning decisions, such as the arrangement of the deconstructed structure parts into the containers 206.

Embodiments of the present disclosure enable a fully automated and optimized management of the structure 202 for deconstruction and placement into the containers 206. The structure 202 may correspond to the structure processed by the method 100 as shown in Figure 1.

The management of the structure 202 may be based on a model 208 that may correspond to at least parts of the structure 202. The model 208 may be a 3D model with attributes. The attributes may indicate properties and characteristics of individual parts of the geometry of the 3D model, which may correspond to physical properties and characteristics of the corresponding parts or components of the structure 202.

The model 208 may be imported from a BIM system or any other building management system that has been set up as a repository for documentation of the structure. The retrieved model may already include the geometry and the attributes. The model 208 may also be at least partially generated based on data from scans of the structure 202 or plans or any other data suitable for generating a 3D geometry.

The model can be segmented into a plurality of segments in item 210 resulting in a segmented geometry 212. Preferably, the segmented geometry 212 includes segments that follow a regular grid or pattern. Additionally or as an alternative, the segmented geometry 212 may include segments that correspond to components or parts of the structure 202, for example, machine parts or components having same or similar properties according to the attributes.

Segments of the segmented geometry 212 may be further grouped in item 210. Processing in item 210 may at least partially correspond to items 106 and 108 of the method 100 as shown in Figure 1. Each group of segments may be assigned to a different virtual container 214, wherein each virtual container 214 may correspond to one of the containers 206.

The assignment of groups to virtual containers 214 may be verified in item 216. Processing in item 216 may at least partially correspond to items 110, 112, and 114 of the method 100 as shown in Figure 1. If calculated (or simulated) properties of the virtual containers 214 do not comply with pre-defined requirements, placement of individual segments in respective virtual containers 214 may be changed and/or assignment of the segments to the virtual containers 214 may be changed in item 210, which may result in at least one changed virtual container 214.

If the verification in item 216 succeeds, the structure 202 may be deconstructed based on the final segmentation geometry 212 in item 204. At least parts of the deconstructed structure may be packaged into the containers 206 according to placement and distribution of the segments across the virtual containers 214.

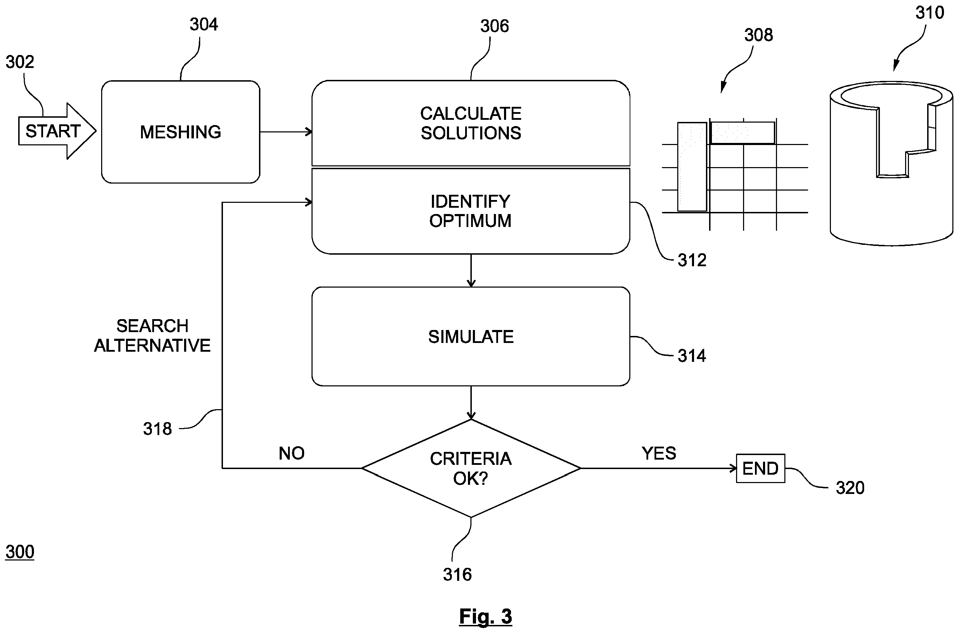

Figure 3 shows a flow chart of a method according to one embodiment of the present disclosure. The method 300 may, at least partially, correspond to the method 100 as shown in Figure 1 and/or to the arrangement as shown in Figure 2, in any combination.

The method 300 may start in item 302. A model of a structure which is to be, at least partially, packaged into containers may be meshed or segmented in item 304 with regard to possible cuts of the structure. Results of item 304 may be used to calculate possible solutions for a placement of the parts of the structure into containers in item 306. For example, a combinatorial approach can be used. The possible solutions may be calculated based on a regular grid or mesh (item 304) that may define basic elements for segments 308. Preferably, the segments may include neighboring basic elements of the grid or mesh. The segments may be further formed such that they can be generated during a (physical) deconstruction of the structure 310. The segments 308 may have a box or brick like form.

The possible solutions may be used to identify an optimum solution for given constraints in item 312. The optimum solution may take a plurality of attributes of the structure and properties of the containers into consideration to define an optimum placement of the parts of the structure into the containers. The identification of optimum may except one or more of the attributes of the structure.

The optimum solution can be used to simulate properties of a packed container in item 314. For example, one or more physical properties may be simulated or calculated, such as a dose rate or activity of the packed containers. The properties may be checked against conditions and criteria in item 316. If the conditions or criteria are not fulfilled, the method 300 may follow path 318 in order to search for an alternative arrangement of segments across containers by re-iterating item 312 and/or 306. If the conditions or criteria are fulfilled, the method may end in item 320.

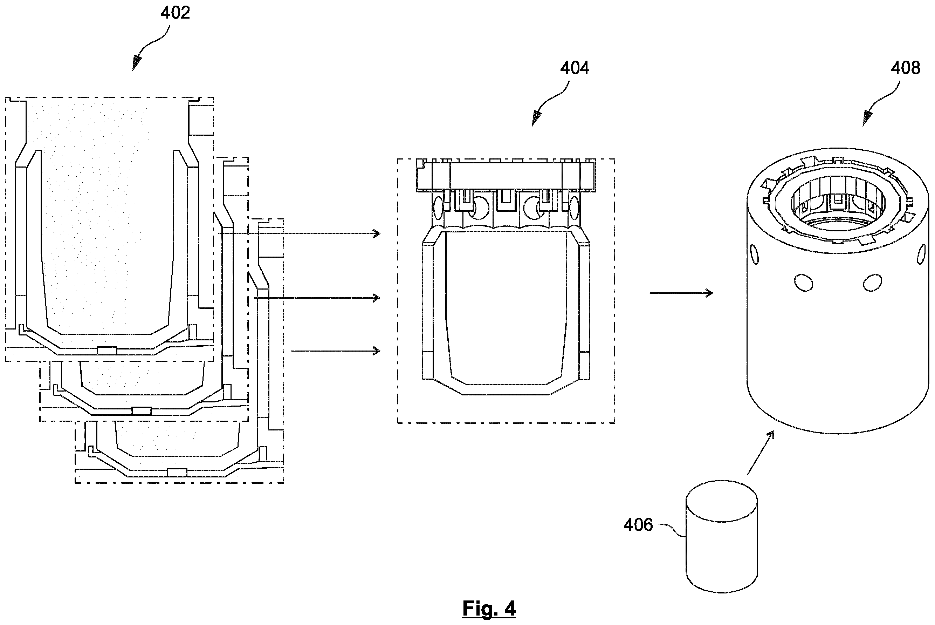

Figure 4 illustrates a conversion of a 2D map to an attributed 3D model applicable in one or more embodiments of the present disclosure. The attributed 3D model 408 may be used in the methods 100 and 300 of Figures 1 and 3, respectively. The attributed 3D model 408 may also correspond to the model 208 in Figure 2.

One or more 2D maps 402 of a structure may be combined to form a 3D geometry 404 of the structure. Further data sources, such as 2D or 3D scans of the structure, photographs, or other 2D or 3D or data of any dimensionality may be used to form the 3D geometry 404.

A database 406 or another data storage or input may be used to provide attributes for the geometry. This may include activation data for parts or components of the 3D geometry 404. However, it is to be understood that any other attributes reflecting properties of parts of the structure may be used and retrieved via the database 406. The attributes and the geometry may be combined to form an attributed 3D model 408.

It is to be understood that the implementational details as provided in Figures 1 to 4 represent preferred examples. Other implementations using different components, modules, blocks, units, circuitry, connections, and links can be used, and the present disclosure is not restricted by a particular implementation or illustrated application area.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A method for managing structures to be packaged in containers, comprising:
providing (104) a model specifying a geometry of a structure, at least parts of the structure to be packaged in one or more containers, the model further specifying at least one attribute for the geometry of the structure;
segmenting (106) the geometry of the structure into a plurality of segments;
determining (108) one or more groups of segments of the plurality of segments, each group of segments to be arranged in one of the one or more containers;
for each container, calculating (110) at least one property of the container based on the at least one attribute associated with the group of segments arranged in the container; and
verifying (112) the at least one property of at least one container based on at least one threshold.

2. The method according to claim 1, wherein the segmenting (106) includes defining a grid of base elements for the model and combining at least some neighboring base elements to form the plurality of segments.

3. The method according to claim 1 or 2, further comprising, if the at least one property of at least one container does not satisfy the at least one threshold, determining one or more new groups of segments of the plurality of segments, each new group of segments to be arranged in one of the one or more containers, and calculating, for each container, the at least one property based on the at least one attribute associated with the new group of segments arranged in the container.

4. The method according to any one of the preceding claims, wherein each group of segments is arranged in a respective container according to an arrangement scheme.

5. The method according to claim 4, further comprising, if the at least one property of at least one container does not satisfy the at least one threshold, determining a new arrangement scheme for at least one of the container, and calculating, for each of the at least one container, the at least one property based on the at least one attribute associated with the group of segments arranged in the container according to the new arrangement scheme.

6. The method according to any one of the preceding claims, wherein the at least one property is calculated using a physical simulation configured to simulate the at least one property of each container based on the at least one attribute of each segment of the group of segments arranged in the container.

7. The method according to any one of the preceding claims, further comprising determining a deconstruction plan for the structure based on the one or more groups of segments in the model, the deconstruction plan specifying a deconstruction of the structure into a plurality of components corresponding to the plurality of segments in the one or more groups.

8. The method according to claim 7, further comprising deconstructing the structure into the plurality of components according to the deconstruction plan.

9. The method according to claim 7 or 8, further comprising packaging the plurality of components into the one or more containers based on the one or more groups and the associated containers.

10. The method according to any one of the preceding claims, wherein the structure includes contaminated material or activated material and the at least one attribute identifies a contamination or radiation value for at least some segments of the structure.

11. The method according to any one of the preceding claims, wherein the structure includes radioactive material, the method further comprising specifying component-related activity of radioactive components of the structure, and using activation data to determine the component-related activity.

12. The method according to any one of the preceding claims, wherein the geometry is provided as a three-dimensional model, the method further comprising building the three-dimensional model based on one or more two-dimensional plans.

13. A device, comprising:
a processor configured to perform a method according to any one of the preceding claims.

14. A deconstructed structure including one or more components, wherein the structure is deconstructed according to the method of claim 8.

15. One or more containers including a deconstructed structure, wherein the one or more containers are packaged according to the method of claim 9.
